# EUROPÄISCHE PATENTSCHRIFT

(11) **EP 0 855 784 B1**
(45) Veröffentlichungstag und Bekanntmachung des Hinweises auf die Patenterteilung: **16.04.2003**
(21) Anmeldenummer: 98810025.1
(22) Anmeldetag: 21.01.1998
(51) Int. Cl.: H02K 7/18, B60C 23/04

(54) **Einrichtung zur Stromerzeugung an Fahrzeugrädern**
Electricity generating device for vehicle wheels
Dispositif de génération d'électricité pour roues de véhicules

(30) Priorität: 22.01.1997 DE 19702056
(43) Veröffentlichungstag der Anmeldung: 29.07.1998
(73) Patentinhaber: Wulff, Gunther, Dr., 8260 Stein am Rhein (CH); Wychnanek, Rainer, 97532 Üchtelhausen-Madenhausen (DE)
(72) Erfinder: Wulff, Gunther, Dr., 8260 Stein am Rhein (CH); Wychnanek, Rainer, 97532 Üchtelhausen-Madenhausen (DE)
(74) Vertreter: Peege, Klaus

(56) Entgegenhaltungen:
- DE-A- 2 744 269
- DE-U- 29 611 955
- FR-A- 2 597 790
- GB-A- 1 021 743
- GB-A- 1 259 613
- US-A- 4 782 256

## Beschreibung

Die Erfindung bezieht sich auf eine Einrichtung zur Stromerzeugung an Fahrzeugrädern zum Anzeigen von Zustandsgrößen betreffend den Innendruck eines auf dem Fahrzeugrad montierten Reifens und möglicherweise eine Zusatzeinrichtung zur Regelung des Innendrucks des Reifens gemäß dem Oberbegriff des Anspruchs 1.

Aus der DE-OS 27 44 269 ist eine Vorrichtung und ein Verfahren zum Anzeigen von Zustandsgrößen eines rotierenden Körpers bekannt, die als eigenständiger, auf das Fahrzeugrad beschränkter Stromerzeuger beschrieben ist, welcher das Prinzip der trägen Masse in der Weise nutzt, daß eine Unwuchtmasse koaxial zu der Mittelachse des Fahrzeugrades drehbar angeordnet ist, wobei die Unwuchtmasse durch die Schwerkraft nach unten gezogen wird und in dieser Lage als Stator für den Magneten dienen soll, um welchen die mit dem Fahrzeugrad verundene Spule mit der Drehzahl des Fahrzeugrades rotiert. Die hier erzeugte elekrische Energie wird zur Betätigung einer Signalanlage benutzt, die dem Betreiber des Fahrzeugs den Zutand des Luftdruckes anzeigen soll, der über ein Spezialventil gemessen wird, das mit dem Innenraum des Reifens in Verbindung steht. Die Signale werden durch einen Sender drahtlos an einen Empfänger auf einer Anzeige für den Fahrer des Fahrzeuges übermittelt.

Die vertikal nach unten zur Fahrbahn hin gerichtete Unwuchtmasse garantiert nur dann die Funktion des Stromerzeugers, wenn die Unwuchtmasse sich nicht aus dieser vorbestimmten Lage während der Fahrt des Kraftfahrzeuges herausbewegt. Hierzu muß sie unverhältnismäßig schwer ausgelegt sein, da die Unwuchtmasse bei der Energieerzeugung von dem Magnetfeld zwischen Magnet und Spule einen gewissen Drehwinkel weit mitgenommen wird, wodurch sie in das vertikal wirkende Beschleunigungsfeld eintritt, welches auf alle an dem aufund abschwingenden Fahrzeugrad befestigten Massen wirkt. Unter bestimmten Beschleunigungskräften wird die Unwuchtmasse weiter aus der senkrecht geplanten Ruhestellung ausgelenkt und dreht letztlich in der Fahrzeugrad-Drehzahl mit, wenn eine Serie von Impulsen beim Überfahren von Fahrbahnunebenheiten auf die Unwuchtmasse gewirkt haben. Ist dieser Zustand erreicht, so wird kein Strom erzeugt und es gibt keine Kraft, die die Unwuchtmasse in ihre Ursprungslage zurückführen kann.

Eine weitere Vorrichtung zur Regelung des Innendrucks von Reifen auf Fahrzeugrädern wird in dem US-Patent 5, 325, 902 beschrieben, wo elektrische Energie von einem Generator erzeugt wird, der gebildet wird aus einem mit dem Fahrzeug feststehenden Spulenteil und einem mit dem Fahrzeugrad umlaufenden Magnet. Die elektrische Energie wird einem elektrisch angetriebenen Luftkompressor zugeführt, der über ein Regelventil mit dem Innenraum des Reifens in Verbindung steht. Der Stromerzeuger nutzt die Drehzahl des Fahrzeugrades sowie die auf großem Durchmesser angeordneten Magnete und Spulen, um elektrische Energie zu erzeugen. Auf einen Einfluß der Fahrdynamik durch Unebenheiten der Fahrbahn auf das Fahrzeugrad wird verzichtet.

Die zweifellos wirksame jedoch nicht eigenständige Anlage ist geeignet für die Erstausrüstung von Fahrzeugen, bei denen die Regelbarkeit des Luftdruckes Vorrang hat vor den Kosten, die die Herstellung eines Generators verursacht. Es kann sich also nur um die Ausrüstung von Spezialfahrzeugen handeln.

Aus GB-A 1.259.613 ist ein Drucküberwachungsgerät bekannt, das auf der Felge eines Rades direkt neben dem Reifenventil angeordnet ist, wobei sich dessen Signalgeber näher der Radnabe befindet. In dem Drucküberwachungsgerät kann eine stromerzeugende Einrichtung, z.B. ein Lineargenerator aufgenommen werden, der durch Beschleunigung oder Verzögerung des Rades, d.h. durch Drehzahlwechsel aktiviert wird. Nachteilig ist, dass bei dem gekannten Drucküberwachungsgerät grosse Zentrifugalbeschleunigungen auftreten, mit der Folge, dass Magnete in einer Amplitudenlage festgelegt werden und somit keine elektrische Energie erzeugt wird.

Die vorliegende Erfindung hingegen beschreibt eine eigenständige Einrichtung zur Erzeugung von elektrischer Energie an einem Fahrzeugrad, beispielsweise zum Betrieb eines Senders, der die aktuellen Luftdruckwerte des Reifens auf diesem Fahrzeugrad meldet, wobei ein Anschluß eines Luftkompressors mit elektrischem Antrieb zum Befüllen des Reifeninneren mit Umgebungsluft möglich ist. Die Einrichtung macht sich die beim Fahren des Fahrzeuges auftretende Dynamik des Fahrzeugrades zunutze, die beim Überfahren von Fahrbahnunebenheiten auftritt, wobei Vertikalbeschleunigungen entstehen, die auf die Masse eines Magneten wirken, der innerhalb einer Spule hin und her verschiebbar ist. Diese Beschleunigungen wirken nur dann zu 100 Prozent, wenn die Bewegungsrichtung des Magneten mit der Beschleunigungsrichtung zusammenfällt, wohingegen keine Beschleunigung auf den Magneten wirkt, wenn sie auf der Bewegungsrichtung bei 90° weitergedrehtem Fahrzeugrad senkrecht steht. Von Vorteil ist die einfache Nachrüstbarkeit an handelsüblichen Fahrzeugrädern sowie die Möglichkeit, den Schwerpunkt der Einrichtung mit einer Mittelachse des Fahrzeugrades in Deckung zu bringen, wobei hohe Drehzahlen des Fahrzeugrades unwuchtfrei möglich sind. Schließlich kann die Einrichtung unter Zuhilfenahme einer speziell gestalteten Grundplatte verdeckt angebracht werden, wobei die Grundplatte in Form einer Radkappe gestaltet sein kann.

Es ist daher die Aufgabe der Erfindung, eine eigenständige, nur mit einem Fahrzeugrad verbundene Einrichtung zur Stromerzeugung zu schaffen, die an einem herkömmlichen Fahrzeugrad verdeckt anbringbar ist und hohe Drehzahlen des Fahrzeugrades durch eindeutige Wuchtbarkeit zuläßt, und die schließlich durch die vertikalen Beschleunigungskräfte, die beim Überfahren von Bodenunebenheien auftreten, angetrieben wird.

Die Lösung der Aufgabe ist in den Ansprüchen beschrieben.

Anhand von zwei Skizzen wird der Aufbau einer Einrichtung zur Stromerzeugung an Fahrzeugrädern in zwei Varianten beschrieben. Es zeigen:
- Fig. 1: eine Einrichtung zur Stromerzeugung an Fahrzeugrädern mit einem spulentragenden Stator und einem mit einer Masse verbundenen drehbaren Magneten auf einer mit dem Fahrzeugrad verbundenen Grundplatte; (Stand der Technik)
- Fig. 2: eine weiterentwickelte Einrichtung mit einem in der Spule hin und her bewegbaren stabförmigen Magneten.

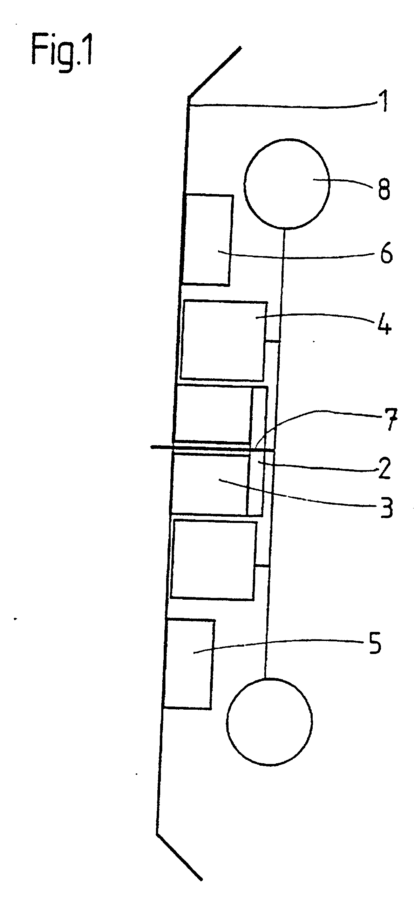

Gemäß Fig 1 ist eine Einrichtung zur Stromerzeugung an Fahrzeugrädern beschrieben, die mit einer Grundplatte 1 eine Einheit bildet. Die Grundplatte 1 ist als Scheibe ausgeführt, die ähnlich einer Radkappe auf einem Fahrzeugrad anbringbar ist und einen Hohlraum bildet, in dem die Einrichtung verdeckt angeordnet ist. Die Einrichtung umfaßt neben der Grundplatte 1 einen mit dieser verbundenen Stator 2 mit Spulen 3, um welche Magnete 4 drehbar auf einer Welle 7 angeordnet sind, wobei die Welle 7 eine zusätzliche Masse 8 in Form eines Schwungrades aufweist, das gegenüber dem Fahrzeugrad frei drehbar angeordnet ist. Die Welle 7 ist koaxial zu einer Mittelachse M des Fahrzeugrades angeordnet, und erzeugt gegenüber diesem eine Differenzdrehzahl, wenn das Fahrzeugrad bei Fahrtbeginn angetrieben wird. Die in einem elektrischen Kraftfeld zwischen der Spule 3 und dem umlaufenden Magneten 4 entstehende elektrische Energie wird einem Regler 5 zugeleitet, der diese ganz oder teilweise an eine Batterie 6, welche ebenfalls in die Einrichtung integriert ist, weiterleitet. Von der Batterie 6 werden Verbraucher V gespeist, die entweder aus einer Signalübertragungsanlage und/oder aus einem elektrisch angetriebenen Luftkompressor bestehen. Die Einrichtung ist eigenständig auf das einzelne Fahrzeugrad beschränkt und kann jedem der Fahrzeugräder beigeordnet werden.

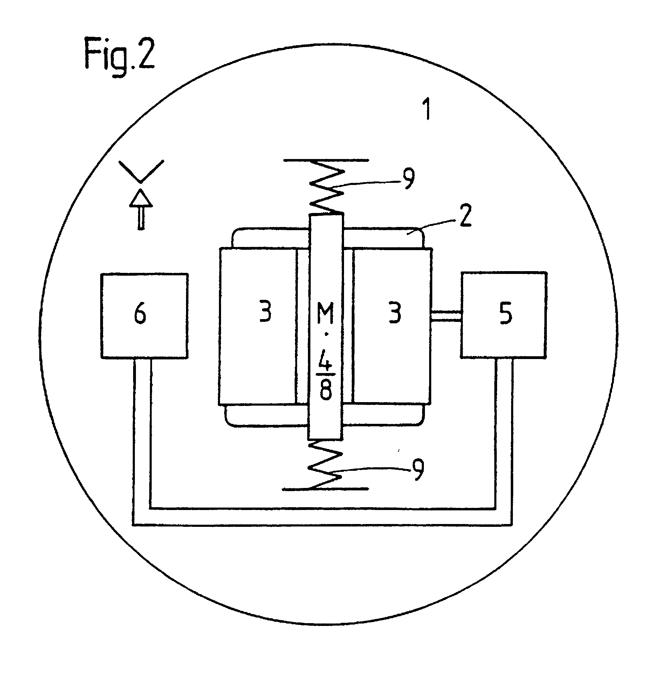

Gemäß Fig. 2 wird der dieser Erfindung zugrunde liegende Vorschlag für eine Einrichtung zur Stromerzeugung an Fahrzeugrädern beschrieben, die ebenfalls an einer Grundplatte 1 angeordnet ist, welche mit dem Fahrzeugrad, ähnlich wie eine Radkappe, verbunden ist. Mit der Grundplatte 1 ist ein Stator 2 verbunden, welcher mindestens eine Spule 3 aufweist, in welcher ein Magnet 4 mit einer bestimmten Masse 8 hin und her beweglich angeordnet ist, wobei die Schwerpunkte des Stators, der Spulen und des Magneten jeweils deckungsgleich mit der Mittelachse M des Fahrzeugrades angeordnet sind. Der Magnet 4 wird von Rückholfedern 9 gegenüber der Grundplatte 1 abgestützt, wobei die Rückholfedern den Magneten 4 in der vorbeschriebenen Mittellage fixieren. Wird der Magnet 4 mit einer ausreichend großen Frequenz in der Spule 3 hin- und hergeschoben, so wird elektrische Energie erzeugt, die dem Regler 5 und schließlich der Batterie 6 zugeleitet werden kann, an welche die Verbraucher V anschließbar sind. Es handelt sich bei der Einrichtung zur Stromerzeugung um einen Massenschwinger mit einem Freiheitsgrad, dessen Masse 8 auf die Vertikalbeschleunigungen des Fahrzeugrades während der Fahrt beim Überfahren von Bodenunebenheiten reagiert. In der gemäß Fig. 2 dargestellten Lage steht der Magnet 4 in vertikaler Position, wodurch die Reaktion auf vertikale Beschleunigungskräfte am Fahrzeugrad in der größtmöglichen Weise erfolgt. Dreht sich das Fahrzeugrad mit dem Stator, den Spulen und den Magneten um 90° weiter, so wird ersichtlich, daß die vertikalen Beschleunigungen des Fahrzeugrades auf die Einrichtung nicht mehr wirken können. Die Auslegung der stromerzeugenden Elemente Spule 3 und Magnet 4 müssen entsprechend ausgelegt sein, um ausreichend elektrische Energie an den Regler 5 sowie an die Batterie 6 liefern zu können.

Der Vorteil der hier beschriebenen Einrichtung zur Stromerzeugung an Fahrzeugrädern liegt in ihrer kostengünstigen Herstellung, sowie in der platzsparenden Anordnung innerhalb einer Grundplatte, wobei die Einrichtung ihrerseits noch einmal gegen Eindringen von Wasser und Schmutz abgedeckt sein kann. Da der Magnet lediglich zwischen dämpfungsfreien Spiralfedern angeordnet ist, gibt es keine mechanische Dämpfung, wodurch der Wirkungsgrad der Anlage erhöht wird.

Es wird darauf verzichtet, eine zweite Möglichkeit der Darstellung einer Einrichtung zum Stromerzeugen an Fahrzeugrädern darzustellen, bei welcher der Stator mit dem Magneten ausgerüstet ist, während die Spule axial beweglich um den Magneten herum oder in diesem angeordnet ist. Es ist überflüssig, festzuhalten, daß die eben beschriebene Umkehrung des Stromerzeugungsprinzips technisch schwerer darstellbar und teuerer ist.

## Patentansprüche

1. Einrichtung zur Stromerzeugung an Fahrzeugrädern mit einem Felgengehäuse als Grundplatte (1) zur Befestigung der Einrichtung am Fahrzeugrad, einem Stator (2) mit mindestens einer Spule (3), mit mindestens einem Magneten (4) mit je einer Masse (8), wobei der Magnet (4) an der Spule (3) zur Erzeugung von elektrischer Energie in der Ebene des Fahrzeugrades vorbeibewegbar ist, mit einem Regler (5) und wahlweise einer Batterie (6), wobei die Bewegungen des Fahrzeugrades während der Fahrt des Fahrzeuges die Vorbeibewegung des Magneten (4) an der Spule (3) aufgrund der Beharrung der Massenträgheit der Masse (8) des Magneten (4) verursachen,
**dadurch gekennzeichnet,**
**dass**
- der Schwerpunkt der Einrichtung mit einer Rotationsachse (M) des Fahrzeugrades zusammenfällt,
- der Magnet (4) axial beweglich durch die Spule (3) und symmetrisch im Fahrzeugrad bezogen auf die Rotationsachse (M) angeordnet ist,
- der Magnet (4) durch Rückholfedern (9) symmetrisch zu der Rotationsachse (M) in einer Mittellage gehalten wird, wobei
- die Rückholfedem (9) einen Bewegungsweg des Magneten (4) zur maximal möglichen Strominduktion in der Spule (3) zulassen.

2. Einrichtung nach Anspruch 1, **dadurch gekennzeichnet, dass** die Grundplatte (1) durch ihre Verbindung mit dem Fahrzeugrad die Einrichtung abdecken und mit handelsüblichen Fahrzeugrädern eine Einheit bilden kann.

3. Einrichtung nach Anspruch 1, **dadurch gekennzeichnet, dass** die Grundplatte (1) zur Aufnahme von Stromverbrauchern (V) ausgelegt ist.

## Claims

1. Electricity generating device for vehicle wheels with a rim housing as base plate (1) for attaching the device on the vehicle wheel, a stator (2) with at least one coil (3) with at least one magnet (4) with a mass (8) each, whereby the magnet (4) to generate electrical energy is movable past the coil (3) in the plane of the vehicle wheel, with a regulator (5) and optional a battery (6) whereby the movements of the vehicle wheel during the drive of the vehicle cause the passing by movement of the magnet (4) due to the perseverance of the mass moment of inertia of the mass (8) of the magnet (4), characterised thereby that
- the strong point of the device coincides with the axis of rotation (M) of the vehicle wheel
- the magnet (4) is arranged movable in axial direction through the coil (3) and within the vehicle wheel relative to the axis of rotation (M)
- the magnet (4) is held in a middle position symmetric to the axis of rotation (M) by means of drawback springs (9) whereby
- the drawback springs (9) permit a path of movement of the magnet (4) for a maximal currency induction in the coil (3).

2. Device according to claim 1 characterised thereby that the base plate (1) by way of its attachement to the vehicle wheel can conceal the device and can form together with a standard vehicle wheel a unit.

3. Device according to claim 1 characterised thereby that the base plate (1) is designed to accept electricity consuming devices (V).

## Revendications

1. Dispositif pour produire du courant au niveau de roues de véhicules avec une garniture de jante sous la forme d'une plaque de montage (1) pour fixer le dispositif au niveau de la roue du véhicule, un stator (2) avec au moins une bobine (3), avec au moins un aimant (4) présentant chacun une masse (8), moyennant quoi l'aimant (4) peut passer devant la bobine (3) pour produire de l'énergie électrique au niveau de la roue du véhicule, avec un régulateur (5) et au besoin une batterie (6), moyennant quoi les mouvements de la roue du véhicule au cours du déplacement du véhicule provoquent le passage de l'aimant (4) devant la bobine (3) en raison de la conservation de l'inertie de la masse (8) de l'aimant (4),
**caractérisé en ce que** :
- le centre de gravité du dispositif correspond à un axe de rotation (M) de la roue du véhicule,
- l'aimant (4) est disposé de manière à pouvoir se déplacer axialement par l'intermédiaire de la bobine (3) et de manière symétrique, dans la roue du véhicule, par rapport à l'axe de rotation (M),
- l'aimant (4) est maintenu par des ressorts de rappel (9) en une position centrale symétrique par rapport à l'axe de rotation (M), moyennant quoi,
- les ressorts de rappel (9) laissent libre une voie de déplacement de l'aimant (4) pour obtenir l'induction de courant la plus élevée possible dans la bobine (3).

2. Dispositif selon la revendication 1, **caractérisé en ce que** la plaque de montage (1) peut recouvrir le dispositif par son raccord avec la roue du véhicule et peut constituer une unité avec les roues du véhicule qu'on a l'habitude d'utiliser.

3. Dispositif selon la revendication 1, **caractérisé en ce que** la plaque de montage (1) est conçue pour recevoir des récepteurs de courant (V) .
